## Europäisches Patentamt
## European Patent Office
## Office européen des brevets

(19)

(11) Numéro de publication: **0 015 165**
A1

(12)

# DEMANDE DE BREVET EUROPEEN

(21) Numéro de dépôt: **80400021.4**

(22) Date de dépôt: **09.01.80**

(51) Int. Cl.³: **H 02 K 1/18**

(30) Priorité: **25.01.79 FR 7901870**

(43) Date de publication de la demande:
**03.09.80 Bulletin 80/18**

(84) Etats Contractants Désignés:
**DE GB IT SE**

(71) Demandeur: **DUCELLIER & Cie**
**Echat 950**
**F-94024 Creteil Cedex(FR)**

(72) Inventeur: **Larrauri, Alexandre**
**Les Costilles**
**F-63570 Brassac les Mines(FR)**

(74) Mandataire: **Habert, Roger**
**Echat 950**
**F-94024 Creteil Cedex(FR)**

(54) **Circuit inducteur de machine électrique tournante, notamment de démarreur de véhicule automobile.**

(57) Ce circuit inducteur comprenant une carcasse (1) et des masses polaires (2), caractérisé en ce que la fixation des masses polaires (2) est effectuée par l'intermédiaire d'au moins une cavité (2a) ménagée dans lesdites masses et formant un angle $\alpha$ avec l'axe des masses polaires, cavité (2a) dans laquelle est repoussée une partie de la matière dont est constituée la carcasse (1).

EP 0 015 165 A1

Circuit inducteur de machine électrique tournante, notamment de
démarreur de véhicule automobile.

La présente invention concerne un circuit inducteur de machine
électrique tournante, notamment de démarreur de véhicule automobile.

Dans les circuits inducteurs, de démarreurs électriques connus
à ce jour, la fixation des masses polaires à l'intérieur de la carcasse est effectuée soit par l'intermédiaire de vis, soit par rivetage.

Dans le premier cas, la masse est percée, puis taraudée, la
carcasse percée et fraisée, dans l'autre cas, il faut également percer la carcasse et prévoir soit un lamage soit un fraisage de la
carcasse, le rivet venant de matière avec la masse polaire.

Ces opérations multiples sont onéreuses et influent conséquemment sur le prix de revient.

La présente invention a pour but de remédier à cet inconvénient
et concerne à cet effet un circuit inducteur de machine électrique
tournante, notamment de démarreur de véhicule automobile, circuit
inducteur comprenant une carcasse et des masses polaires, caractérisé en ce que la fixation des masses polaires est effectuée par l'intermédiaire d'au moins une cavité, ménagée dans lesdites masses et
formant un angle $\alpha$ avec l'axe des masses polaires, cavité dans laquelle est repoussée une partie de la matière dont est constituée
la carcasse.

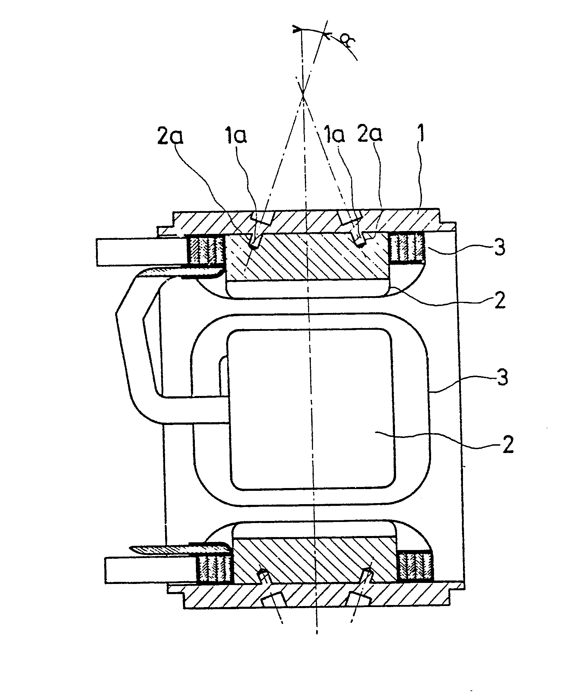

La description qui va suivre en regard du dessin unique annexé
fera mieux comprendre comment l'invention peut être réalisée.

Le dessin unique représente une vue en coupe longitudinale du
circuit inducteur de démarreur électrique de véhicule automobile,
circuit inducteur comprenant une carcasse 1, des masses polaires 2,
et des bobines inductrices 3, disposées de façon connue autour des
masses polaires 2.

Suivant un mode préféré de réalisation de l'invention la fixation des masses polaires 2, à l'intérieur de la carcasse 1 est effectuée par l'intermédiaire de deux cavités 2a, prévues dans lesdites masses, et obtenues, par exemple, par perçage.

Ces cavités forment un angle $\alpha$ avec l'axe des masses polaires
(voir figure unique), cavités dans lesquelles sont repoussées, par
tout moyen connu, des parties 1a de la matière dont est constituée la carcasse 1.

Cette opération de repoussage est réalisée après positionnement préalable des bobines inductrices 3.

On conçoit bien qu'un tel mode de fixation est très avantageux car il évite d'avoir à effectuer les perçages et fraisages de la technique habituelle sur la carcasse, et qu'il permet également de supprimer les vis de fixation et le taraudage des masses polaires.

Ce mode de fixation a comme autre avantage de pouvoir effectuer le contrôle de l'alésage des masses polaires et le contrôle électrique avant de repousser la matière dans les cavités des masses.

Il est évident que les cavités de masses polaires formant un angle $\alpha$ avec l'axe de masses polaires peuvent être ménagées transversalement à l'axe longitudinal de la carcasse et que leur nombre est fonction de la force nécessaire pour obtenir un assemblage satisfaisant.

## R E V E N D I C A T I O N

1.- Circuit inducteur de machine électrique tournante, notamment de démarreur de véhicule automobile, circuit inducteur comprenant une carcasse (1) et des masses polaires (2), caractérisé en ce que la fixation des masses polaires (2) est effectuée par l'intermédiaire d'au moins une cavité (2a) ménagée dans lesdites masses et formant un angle $\alpha$ avec l'axe des masses polaires, cavité (2a) dans laquelle est repoussée une partie de la matière dont est constituée la carcasse (1).

# RAPPORT DE RECHERCHE EUROPEENNE

0015165

**Office européen des brevets**

Numéro de la demande

EP 80 40 0021

| Catégorie | Citation du document avec indication, en cas de besoin, des parties pertinentes | Revendication concernée |
|---|---|---|
| | **FR - A - 2 241 901** (BOSCH) <br> * Page 2, lignes 2-13; page 2, ligne 41 à page 3, ligne 6 * | rev. unique |
| | **US - A - 3 810 056** (JEREB) <br> * Colonne 4, lignes 14-29; colonne 4, lignes 44-56 * | rev. unique |
| | **US - A - 3 973 151** (BOWCOTT LUCAS EL. CO.) <br> * Colonne 2, lignes 27-50 * | rev. unique |
| | **FR - A - 2 059 098** (NIPPON DENSO) <br> * Page 3, lignes 14-20 * | rev. unique |
| A | **FR - A - 2 376 542** (AROSHIDZE et al.) <br> * Page 5, lignes 11-21; figure 5 * | |
| A | **US - A - 3 761 754** (BOESEL) <br> * Colonne 3, lignes 37-48; figures 3,4 * | |
| A | **FR - A - 2 068 244** (BOSCH GmbH) <br> * Page 2, lignes 13-21; page 3, lignes 16-24 * | |

./.

**CLASSEMENT DE LA DEMANDE (Int. Cl. 3)**

H 02 K   1/18

**DOMAINES TECHNIQUES RECHERCHES (Int. Cl. 3)**

H 02 K   1/18
          1/28
          15/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cite dans la demande
L: document cite pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 07-05-1980 | TANGOCCI |

OEB Form 1503.1   06.78

**Office européen des brevets**

**RAPPORT DE RECHERCHE EUROPEENNE**

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| A | DE - A - 2 060 732 (ALTMANN) <br> * Page 4, lignes 4-8 * <br><br> -- | | |
| A | FR - A - 2 206 612 (FORD S.A.) <br> * Page 5, lignes 27-32; page 6, lignes 22-28; figures 3,4 * <br><br> -- | | |
| A | GB - A - 1 118 604 (BOSCH GmbH) <br> * Page 2, lignes 30-32 * <br><br> ---- | | **DOMAINES TECHNIQUES RECHERCHES (Int. Cl. 3)** |

OEB Form 1503.2   06.78